# EUROPÄISCHE PATENTSCHRIFT

(11) **EP 2 101 190 B1**
(45) Veröffentlichungstag und Bekanntmachung des Hinweises auf die Patenterteilung: **06.07.2011**
(21) Anmeldenummer: 08105776.2
(22) Anmeldetag: 12.11.2008
(51) Int. Cl.: G01S 7/52, G01S 15/93, H04L 29/12, G01S 15/87

(54) **Adressierung von Sende- und Empfangseinheiten einer Ultraschallabstandsmesseinrichtung**
Allocation of addresses to transmit- and receive units of an ultrasonic sensor system
Attribution des adresses aux unités de transmission et réception d'un système à ultrasons

(30) Priorität: 14.03.2008 DE 102008000690
(43) Veröffentlichungstag der Anmeldung: 16.09.2009
(73) Patentinhaber: Robert Bosch GmbH, 70442 Stuttgart (DE)
(72) Erfinder: Seiter, Michael, 71735 Eberdingen-Hochdorf (DE); Klotz, Albrecht, 72631 Aichtal (DE); Treptow, Thomas, 71229 Leonberg (DE); Hering, Michael, 71229 Leonberg (DE); Schmid, Dirk, 75397 Simmozheim (DE); Gerlach, Michael, 71263 Weil Der Stadt (DE); Rapps, Peter, 76227 Karlsruhe (DE); Herder, Bjoern, 70469 Stuttgart (DE)

(56) Entgegenhaltungen:
- EP-A- 0 980 165
- EP-A- 1 455 278
- DE-A1-102005 054 390
- DE-A1-102005 055 964

## Beschreibung

Die vorliegende Erfindung betrifft ein Verfahren und ein System zur Adressierung einer Mehrzahl von Sende- und Empfangseinheiten einer Ultraschallabstandsmesseinrichtung.

### Stand der Technik

Ultraschallababstandsmesseinrichtungen kommen insbesondere bei Kraftfahrzeugen zum Einsatz, wo mit Hilfe von Sende- und Empfangseinheiten, insbesondere für Ultraschall-, Radar- und Infrarotsignale, die zu mehreren an der Kraftfahrzeugkarosserie fest montiert sind, Hindernisse in der Umgebung des Fahrzeugs detektiert werden und ggf. ein Warnsignal erzeugt wird, um den Fahrer des Fahrzeugs in unübersichtlichen Verkehrssituationen , wie etwa beim Einparken, vor einer potentiell gefährlichen Annäherung an ein Hindernis zu warnen. Eine derartige Ultraschallabstandsmesseinrichtung und ein Verfahren zu ihrem Betrieb sind z.B. aus der DE 40 23 538 A1 bekannt.

Außerdem ist aus der DE 101 38 001 A1 eine Ultraschallabstandsmesseinrichtung für den Einsatz in Kraftfahrzeugen bekannt, welche eine Mehrzahl von Sende- und Empfangseinheiten zum Aussenden von Signalen und Empfangen der von einem externen Gegenstand zurückgeworfenen Echos umfasst. Des weiteren ist in dieser Einrichtung eine Auswertungseinheit zum Abschätzen der Entfernung von der Abstandsmesseinrichtung zu dem externen Objekt anhand der empfangenen Echos vorgesehen. Diese Ultraschallabstandsmesseinrichtung weist einen Betriebszustand zum Berechnen der relativen Positionen der Sende- und Empfangseinheiten zueinander anhand der zurückgeworfenen Echos auf.

Konventionelle ultraschallbasierte Fahrassistenzsysteme (US-FAS), insbesondere die ultraschallbasierte Einparkhilfe (US-EPH), befinden sich seit über zehn Jahren auf dem Markt. Typische Systemkonfigurationen der US-EPH besitzen zwei bis sechs Sensoren pro Stoßfänger. Alle bislang bekannten Systeme verwenden Punkt-zu-Punkt-Verbindungen zur Datenübertragung zwischen den Sensoren und dem Steuergerät. Die Punkt-zu-Punkt-Verbindungen übertragen entweder analoge Rohsignale, vorverarbeitete Daten über herstellerspezifische proprietäre Schnittstellen bzw. die LIN-Schnütstelle. In diesen konventionellen Systemen werden baugleiche Sensoren verwendet, wobei die logische und geographische Adressierung über die Punkt-zu-Punkt-Verbindungen erfolgt. Die genaue Kenntnis darüber, welcher Sensor an welcher Position im Stoßfänger verbaut wurde, ist für das System von Bedeutung, da die Sensoren individuell von Steuergerät angesteuert und die Information der Sensoren (z.B. empfangene Echos) eindeutig einer geographischen Position im Stoßfänger zugeordnet werden müssen, um z.B. eine genaue Abstandberechnung durchführen oder ein Display mit lateraler Auflösung ansteuern zu können.

Weiterhin ist aus der DE 10 2005 055 964 A1 die Zuweisung eindeutiger Bus-Adressen an Sensoren eines Kraftfahrzeugsystems über eine zeitversetzte Laufzeitmessung eines Signals, das zwischen Master und Slave übertragen wird, bekannt. Dabei kann als Master ein Sensor oder ein zentrales Steuergerät im Kraftfahrzeug vorgesehen sein. Ähnliche Systeme sind auch aus der EP 0 980 165 A bekannt, die sich auf eine Adresszuweisung entsprechend der Leitungslänge eines Datenbusses zwischen Master und Slave bezieht, oder aus der DE 10 2005 054 390 A1, die sich auf eine Adresszuweisung entsprechend der Position des Ultraschallsensors am Bus bezieht, bzw. aus der EP 1455 278 A, aus der eine Adresszuweisung entsprechend der Position des Sensors am Bus hervorgeht, bekannt

### Vorteile der Erfindung

Wie im unmittelbar vorangehenden Abschnitt erläutert, erfolgt die logische und geographische Adressierung der Sensoren bzw. Sende- und Empfangseinheiten der US-FAS üblicherweise über Punkt-zu-Punkt-Verbindungen. Eine Realisierung eines Sensor-Busses für US-FAS wäre wünschenswert, ist aber bis dato nicht bekannt. Dies liegt wohl unter anderem daran, dass ein Sensorbussystem für eines der oben beschriebenen US-FAS unter den oben genannten Randbedingungen und Anforderungen (also insbesondere die Verwendung baugleicher Sensoren, sowie deren logische und geographische Adresslerung) mit zusätzlichem (HW-) Aufwand, z.B. als daisy-chain (Zusatzpin im Sensor) realisiert werden müsste und daher recht aufwändig ist

Durch die vorliegende Erfindung wird ein System und ein Verfahren zur Adressierung einer Mehrzahl von Sende- und Empfangseinheiten einer Ultraschallabstandsmesseinrichtung geschaffen, mit welchen eine einfache Realisierung eines Sensor-Busses (z.B. LIN, PSI, ...) ermöglicht wird, und zwar unter Verwendung baugleicher Sensoren bzw. Sende- und Empfangseinheiten, welche sich lediglich durch eine während des Produktionsprozesses der Sende- und Empfangseinheiten vergebene eindeutige Kennzeichnung voneinander unterscheiden, wobei nicht bekannt ist, welche eindeutige Adressierung die im Sensor-Bus verbauten Sende- und Empfangseinheiten haben. Die Erfindung sorgt im Zusammenhang mit der eindeutigen Adressierung sowohl für eine eindeutige logische, als auch für eine eindeutige geographische Adressierung der Sende- und Empfangseinheiten im System. In Systemen mit baugleichen Sende- und Empfangseinheiten, deren logische Adressen bekannt ist, ermöglicht die Erfindung eine eindeutige geographische Adressierung der Sende- und Empfangseinheiten im System.

Wie bereits erwähnt, erhält jede Sende- und Empfangseinheit bei ihrer Produktion eine eindeutige Kennzeichnung elektronischer Natur (HW- und/oder SW-technisch realisiert). Diese eindeutige Kennzeichnung kann beispielsweise in Form einer Serien-Nummer (z.B. ein 48-Bit-Wert) vorliegen, welche die jeweilige Sende- und Empfangseinheit über den Sensor-Bus an das Steuergerät senden kann. Da in der Regel nicht bekannt ist, welche und evtl. wie viele Sende- und Empfangseinheiten im System verbaut sind, muss die eindeutige Adresse und evtl. die Anzahl der verbauten Sende- und Empfangseinheiten ermittelt werden. Diesen Vorgang nennt man "logische Adressierung". Dabei werden die einzelnen Sende- und Empfangseinheiten vom System logisch identifiziert, um später eine eindeutige Signalzuordnung der von den einzelnen Sende- und Empfangseinheiten an das Steuergerät des Systems übermittelten Signale zu den jeweils richtigen Sende- und Empfangseinheiten zu ermöglichen. Es soll also sicher gestellt werden, dass das Signal, welches von einer bestimmten Sende- und Empfangseinheit kommt, vom System auch genau dieser Sende- und Empfangseinheit zugeordnet wird, und keiner anderen Sende- und Empfangseinheit. Umgekehrt wird durch die logische Adressierung auch gewährleistet, dass Befehle vom Steuergerät des Systems an eine bestimmte Sende- und Empfangseinheit auch von genau dieser Sende- und Empfangseinheit empfangen und verarbeitet werden, und nicht von einer anderen Sende- und Empfangseinheit, für die dieser Befehl nicht bestimmt ist.

Mit der sog. "geographische Adressierung" kann über die oben erläuterte logische Adressierung hinaus beispielsweise mit jeder Sende- und Empfangseinheit ihre lokale Position im Stoßfänger verknüpft werden, und damit auch adressiert werden. Dabei ist es beispielsweise möglich, einer logischen Adresse, welche bereits einer bestimmten Sende- und Empfangseinheit zugewiesenen worden ist, eine geographische Adresse zuzuordnen. Diese geographische Adresse kann z.B. "Position 1", "Position 2", "Position 3" oder "Position 4" lauten. Über eine im Steuergerät des Systems hinterlegte Liste, welche diese geographischen Adressen mit den jeweiligen tatsächlichen lokalen Positionen im Stoßfänger verknüpft, kann dann das Steuergerät z.B. direkt die Sende- und Empfangseinheit "im hinteren Stoßfänger ganz rechts" ansprechen bzw. Signale von dieser Sende- und Empfangseinheit sofort anhand ihrer geographischen Adresse als Signale von dieser speziellen lokalen Position im Stoßfänger identifizieren. Der Ausdruck "geographische Adresse" ist jedoch nicht auf die soeben erläuterte räumliche Begrifflichkeit beschränkt. So können über die geographische Adressierung beispielsweise auch funktionale Einsatzparameter der einzelnen Sende- und Empfangseinheiten adressiert werden, wie zum Beispiel Reichweite oder Winkelbereich, oder auch logische Gruppierungen ("vorne", "hinten") adressiert werden. Letztlich kann also unter der "geographischen Adressierung" im weitesten Sinne eine auf einer ersten logischen Adressierung aufbauende zweite (logische) Adressierung verstanden werden. Grundgedanke der vorliegenden Erfindung ist es, die oben erläuterte Zuweisung einer eindeutigen Adresse an jede der im System verbauten Sende- und Empfangseinheiten auf Grundlage einer Veränderung einer Sende- und/oder Empfangseigenschaft jeweils einer der Sende- und Empfangseinheiten durchzuführen. Diese Veränderung kann durch zeitversetztes Manipulieren einer Komponente der jeweiligen Sende- und Empfangseinheiten erreicht werden. Damit unterscheidet sich die vorliegende Erfindung von einer sog. "Echomethode", bei welcher auf das Senden eines Signals und das Empfangen desselben Signals (ggf. an einem externen Gegenstand reflektiert) unter Berücksichtigung von Schalllaufzeiten, oder bei mehreren Signalen unter Berücksichtigung von Laufzeitunterschieden, abgestellt wird. Das erfindungsgemäße Verfahren bzw. System besticht daher durch seine Unempfindlichkeit gegen Störungen in der Messumgebung.

Gemäß einer ersten Ausgestaltung dieses Grundgedankens wird erfindungsgemäß ein Verfahren zum Adressieren einer Mehrzahl von Sende- und Empfangseinheiten einer Ultraschallabstandsmesseinrichtung vorgeschlagen, wobei jeder der Sende- und Empfangseinheiten eine eindeutige Adresse zugewiesen wird, und zwar auf Grundlage einer Veränderung einer Sende- und/oder Empfangseigenschaft jeweils einer der Sende- und Empfangseinheiten durch zeitversetztes Manipulieren einer Komponente der jeweiligen Sende- und Empfangseinheiten. Vorzugsweise umfasst das erfindungsgemäße Verfahren einen ersten Schritt, in dem alle Sende- und Empfangseinheiten Ultraschallsignale aussenden und/oder empfangen, einen zweiten Schritt, in dem eine Komponente einer der Sende- und Empfangseinheiten manipuliert wird, einen dritten Schritt, in dem eine durch den zweiten Schritt hervorgerufene Veränderung einer Sende- und/oder Empfangseigenschaft dieser einen Sende- und Empfangseinheit erfasst wird, und einen vierten Schritt, in dem nur dieser einen Sende- und Empfangseinheit, bei der im dritten Schritt die Veränderung einer Sende- und/oder Empfangseigenschaft erfasst worden ist, eine eindeutige Adresse zugewiesen wird.

Korrespondierend zur Ausgestaltung der Erfindung in Form eines Verfahrens wird ein System zur Adressierung einer Mehrzahl von Sende- und Empfangseinheiten einer Ultraschallabstandsmesseinrichtung vorgeschlagen, welches eine Adressen-Zuweisungseinrichtung umfasst zum Zuweisen einer eindeutigen Adresse an jede der Sende- und Empfangseinheiten auf Grundlage einer Veränderung einer Sende- und/oder Empfangseigenschaft jeweils einer der Sende- und Empfangseinheiten durch zeitversetzte Manipulation einer Komponente der jeweiligen Sende- und Empfangseinheiten.

Die oben beschriebene erfindungsgemäße Adressierung von Busteilnehmern mit Hilfe externer Veränderung der Sensoreigenschaften hat mehrere Vorteile. Zum einen werden gegenüber den herkömmlich zur Datenübertragung zwischen den Sende- und Empfangseinheiten und dem Steuergerät verwendeten Punkt-zu-Punkt-Verbindungen durch Realisierung eines Sensor-Busses Leitungen im Kabelbaum des Systems eingespart. Dabei kann die Realisierung dieses Sensor-Busses ohne daisy-chain erfolgen, wodurch keine Zusatzaufwände, wie z.B. in Form eines Zusatzpins, in den Sende- und Empfangseinheiten anfallen. Diese wiederum ermöglicht vorteilhafterweise die Verwendung baugleicher Sende- und Empfangseinheiten, welche sich lediglich durch eine produktionsseitige eindeutige Kennzeichnung elektronischer Natur, beispielsweise in Form einer Serien-Nummer, voneinander unterscheiden. Zum anderen ermöglicht die erfindungsgemäße Adressierung die automatische Erkennung der Busteilnehmer sowohl bei der ersten Inbetriebnahme als auch im Reparaturfall oder bei erneuter softwaremäßiger Implementierung des Systems. Darüber hinaus ist die erfindungsgemäße Adressierung, wie bereits weiter oben erwähnt, tolerant gegenüber Störungen in der Messumgebung.

Weitere Merkmale und Vorteile von Ausführungsformen der Erfindung ergeben sich aus der nachfolgenden Beschreibung mit Bezug auf die beigefügten Figuren.

### Kurzbeschreibung der Figuren

Es zeigen:
- Fig. 1: eine schematische Darstellung des Einsatzes von Ultraschallababstands- messeinrichtungen an den Stoßfängerkonturen eines Fahrzeugs;
- Fig. 2: den Ablauf des erfindungsgemäßen Adressierungs-Verfahrens in einer bevor- zugten Ausführungsform;
- Fig. 3: ein beispielhaftes Nachschwingverhalten einer Sensormembran nach einer Sende- oder Empfangsanregung im Normalzustand der Membran;
- Fig. 4: ein beispielhaftes Nachschwingverhalten einer Sensormembran nach einer Sende- oder Empfangsanregung bei einer gegenüber der Membran aus Fig. 3 veränderten Masse der Membran; und
- Fig. 5: eine symbolhafte Darstellung des erfindungsgemäßen Adressierungs- Systems.

Beschreibung der bevorzugten Ausführungsformen der Erfindung

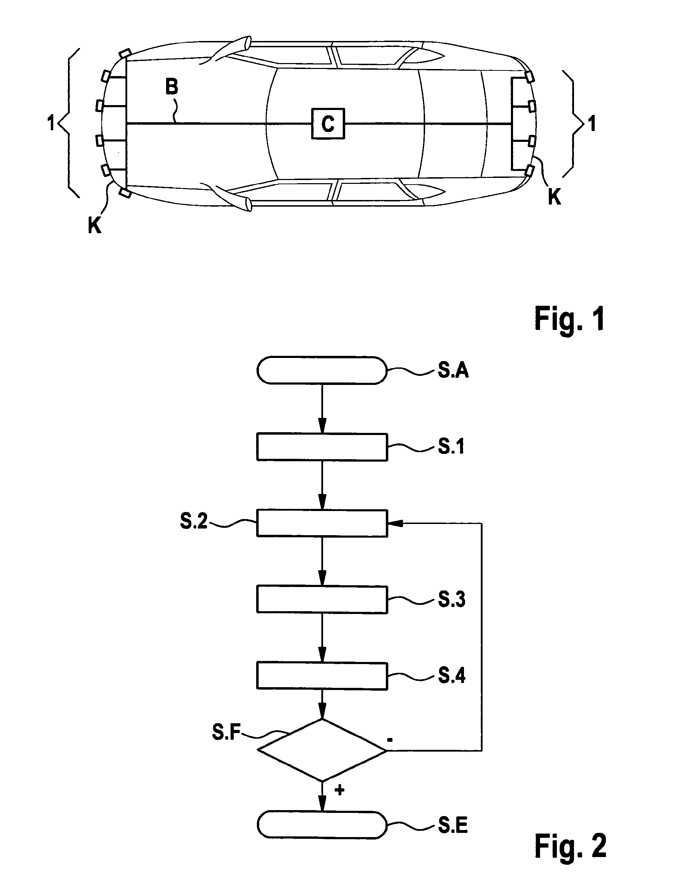

In der Fig. 1 ist ein Kraftfahrzeug dargestellt, an dessen vorderer und hinterer Stoßfängerkontur K Sende- und Empfangseinheiten 1 von Abstandsmesseinrichtungen montiert sind. Anstelle der Montage im Stoßfänger ist auch eine beliebige andere Montage der Sende- und Empfangseinheiten 1 (z.B. Ultraschallabstandssensoren) am Fahrzeug denkbar. Die Anordnung im Stoßfänger oder an der Stoßfängerkontur K bietet jedoch den Vorteil, dass zunächst die Sende- und Empfangseinheiten 1 am Stoßfänger montiert und dieser anschließend mit dem Fahrzeug verbunden werden kann.

Die Sende- und Empfangseinheiten 1 können Teil einer ultraschallbasierten Einparkhilfe (US-EPH) sein. Dieses US-EPH umfasst unter anderem ein elektronisches Steuergerät C, welches optional über CAN an Fahrzeugsignale angeschlossen ist. Die Sende- und Empfangseinheiten 1 sind über einen oder mehrere Sensor-Busse B mit dem Steuergerät C verbunden. Das Steuergerät C ist der Bus-Master und die Sende- und Empfangseinheiten 1 sind die Slaves. Das Steuergerät C ist in der Lage, die Sende- und Empfangseinheiten 1 anzusteuern und die von den Sende- und Empfangseinheiten 1 gelieferten Messergebnisse auszuwerten. Die Sende- und Empfangseinheiten 1 können durch das Steuergerät C dazu veranlasst werden, Ultraschall-Signale abzustrahlen, die von einem Hindernis reflektiert werden können. Wird ein vorbestimmter kritischer Abstandswert zu einem Hindernis unterschritten, so kann das Steuergerät C die Ausgabe einer optischen Warnung über eine Anzeige und/oder einer akustischen Warnung über einen Lautsprecher (nicht dargestellt) veranlassen.

Fig. 2 zeigt den Ablauf des erfindungsgemäßen Adressierungs-Verfahrens in einer bevorzugten Ausführungsform. Zunächst werden in einem Anfangsschritt S.A die Sende- und Empfangseinheiten 1 in einen Initialisierungsmodus versetzt. In dieser Initialisierungsphase sind alle Sende- und Empfangseinheiten 1 in der Lage, Ultraschallsignale auszusenden, Ultraschallsignale zu empfangen, und dabei ihre Sende- und Empfangseigenschaften zu überwachen.

Auf den Anfangsschritt S.A folgt ein erster Schritt S.1, in dem alle Sende- und Empfangseinheiten 1 Ultraschallsignale aussenden und/oder empfangen.

In einem zweiten Schritt S.2 wird eine Komponente einer der Sende- und Empfangseinheiten 1 manipuliert. Dabei kommt es nicht darauf an, dass ein Ultraschallsignal von oder zu der Sende- und Empfangseinheit 1 verändert wird. Vielmehr wird eine physikalische Eigenschaft der Sende- und Empfangseinheit 1 selbst verändert. Bei der manipulierten Komponente der Sende- und Empfangseinheit 1 kann es sich um deren Membran, bei der Veränderung der physikalischen Eigenschaft kann es sich um das Nachschwingverhalten (insbesondere die Nachschwingdauer) nach einer Sendeanregung oder nach einer Empfangsanregung der Membran handeln.

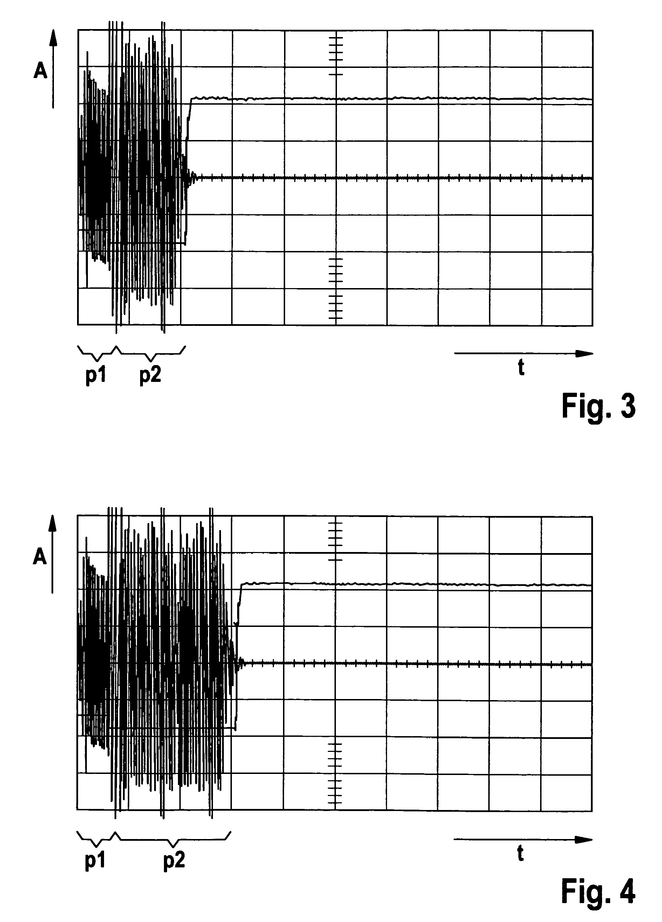

Beispielhaft wird der zweite Schritt S.2 an der Sendeeigenschaft des Nachschwingens, also dem Nachschwingen der Membran der Sende- und Empfangseinheiten 1 nach einer Sendeanregung, unter Bezugnahme auf die Figuren 3 und 4 erläutert. In den Figuren 3 und 4 ist jeweils die Schwingungsamplitude A der Membran über der Zeit t aufgetragen. Fig. 3 zeigt ein Nachschwingverhalten einer Sensormembran (insbesondere) nach einer Sendeanregung der Dauer p1 im Normalzustand der Membran. In diesem Normalzustand weist der Nachschwingvorgang eine gewisse Dauer p2 auf, die gemessen werden kann (siehe dritter Schritt S.3 weiter unten). Durch Manipulierung der Membran - beispielsweise Masseänderung der Membran - wird die Sendeeigenschaft, in diesem Fall die Dauer p2 des Nachschwingens, verändert. Diesen Umstand verdeutlicht Fig. 4, welche das Nachschwingverhalten der Sensormembran nach einer Sendeanregung der Dauer p1 bei einer gegenüber der Membran aus Fig. 3 veränderten Masse der Membran darstellt. Durch die in diesem Beispiel vergrößerte Masse der Membran hat sich die Dauer p2 des Nachschwingens der Membran verlängert. Eine vorübergehende Vergrößerung der Masse der Membran kann beispielsweise durch Aufbringen eines leicht wieder ablösbaren Klebefilms oder durch Aufsprühen einer schnell verdunstenden Flüssigkeit auf die Membran erreicht werden. Alternativ kann auch einfach die Membran mit der Fingerkuppe berührt werden.

In einem dritten Schritt S.3 wird eine durch den zweiten Schritt S.2 hervorgerufene Veränderung einer Sende- und/oder Empfangseigenschaft dieser einen Sende- und Empfangseinheit 1 erfasst. Im obigen Beispiel kann die durch die Massenvergrößerung der Membran hervorgerufene Verlängerung der Dauer p2 des Nachschwingens der Membran in der betreffenden Sende- und Empfangseinheit 1 selbst detektiert werden.

In einem vierten Schritt S.4 wird zunächst nur dieser einen Sende- und Empfangseinheit 1, bei der im dritten Schritt S.3 die Veränderung einer Sende- und/oder Empfangseigenschaft erfasst worden ist, eine eindeutige Adresse zugewiesen.

Danach geht das Verfahren zu einem Prüfschritt S. F über, in dem geprüft wird, ob bereits allen Sende- und Empfangseinheiten 1 eine eindeutige Adresse zugewiesen ist. Wenn dies nicht der Fall ist (Minus-Zeichen in Fig.2), werden der zweite S.2, dritte S.3 und vierte Schritt S.4 mit einer anderen Sende- und Empfangseinheit 1 durchgeführt, welcher noch keine eindeutige Adresse zugewiesen worden ist. Wenn bereits allen Sende- und Empfangseinheiten 1 eine eindeutige Adresse zugewiesen ist (Plus-Zeichen in Fig.2), geht das Verfahren zum Ende S.E über.

Obige Ausführungen zum Nachschwingverhalten nach einer Sendeanregung der Membran gelten entsprechend für das Nachschwingverhalten nach einer Empfangsanregung der Membran.

In der Initialisierungsphase wird also mit zeitlichem Versatz bei jeweils einer der Sende- und Empfangseinheiten 1 eine Sende- und/oder Empfangseigenschaft verändert. Jeweils diejenige Sende- und Empfangseinheit 1, welche eine Veränderung ihrer Sende- bzw. Empfangseigenschaften detektiert, sendet ihre werksseitige eindeutige Kennzeichnung (z.B. ihre Serien-Nummer) an das Steuergerät C des Systems. Hierüber kann die mit dem Steuergerät gekoppelte Adressen-Zuweisungseinrichtung AZ den Sende- und Empfangseinheiten 1 der Reihe nach eindeutige logische Adressen zuweisen. Solange eine Sende- und Empfangseinrichtung 1 keine Veränderung detektiert, nimmt sie während der Initialisierungsphase nicht an der Buskommunikation teil.

Wenn die Sende- bzw. Empfangseigenschaften in einer vorbestimmten Reihenfolge der Sende- und Empfangseinheiten 1 verändert werden und diese Reihenfolge dem Steuergerät C bekannt ist, kann das Steuergerät C anhand der Reihenfolge, in der die Sende- und Empfangseinheiten 1 ihre eindeutigen Kennzeichnungen übertragen, die Position der Sende- und Empfangseinheiten 1 im Stoßfänger K bestimmen. Somit ist mit dem erfindungsgemäßen Verfahren auch eine geographische Adressierung möglich.

Optional ist es auch möglich, Sende- und Empfangseinheiten 1 ohne werksseitige eindeutige Kennzeichnung zu verbauen. In diesem Fall würde das Steuergerät C jeweils derjenigen Sende- und Empfangseinheit 1 eine entsprechende logische Adresse zuweisen, die gerade oder als nächste die Veränderung ihrer Sende- bzw. Empfangseigenschaften detektiert. Die entsprechende Sende- und Empfangseinheit 1 speichert die zugewiesene logische Adresse und ist darüber eindeutig logisch und geographisch adressiert.

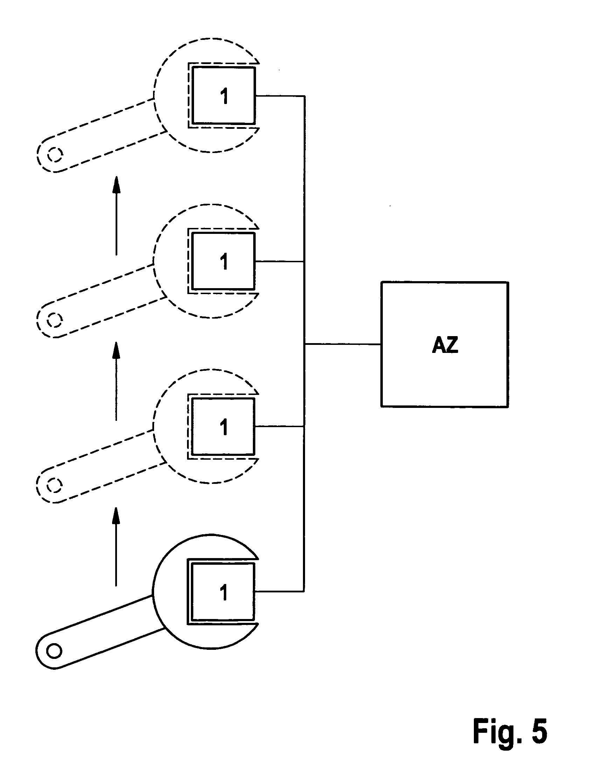

Fig. 5 zeigt eine symbolhafte Darstellung des erfindungsgemäßen Adressierungs-Systems. Der von einer Sende- und Empfangseinheit 1 zur nächsten wandernde Schraubenschlüssel deutet an, dass die Adressen-Zuweisungseinrichtung AZ eingerichtet ist, jeder der Sende- und Empfangseinheiten 1 eine eindeutige Adresse zuzuweisen auf Grundlage einer Veränderung einer Sende- und/oder Empfangseigenschaft jeweils einer der Sende- und Empfangseinheiten 1 durch zeitversetzte Manipulation einer Komponente der jeweiligen Sende- und Empfangseinheiten 1.

## Patentansprüche

1. Verfahren zum Adressieren einer Mehrzahl von Sende- und Empfangseinheiten (1) einer Ultraschallabstandsmesseinrichtung, wobei jeder der Sende- und Empfangseinheiten (1) eine eindeutige Adresse zugewiesen wird, und zwar auf Grundlage einer Veränderung einer Sende- und/oder Empfangseigenschaft bezüglich des Sendens und Empfangens von Ultraschallsignalen jeweils einer der Sende- und Empfangseinheiten (1) durch zeitversetztes Manipulieren einer Komponente der jeweiligen Sende- und Empfangseinheiten (1), wobei die Komponente der jeweiligen Sende- und Empfangseinheiten (1) eine Membran derselben ist.

2. Verfahren nach Anspruch 1, umfassend:
einen ersten Schritt (S.1), in dem alle Sende- und Empfangseinheiten (1) Ultraschallsignale aussenden und/oder empfangen,
einen zweiten Schritt (S.2), in dem eine Komponente einer der Sende- und Empfangseinheiten (1) manipuliert wird,
einen dritten Schritt (S.3), in dem eine durch den zweiten Schritt (S.2) hervorgerufene Veränderung einer Sende- und/oder Empfangseigenschaft dieser einen Sende- und Empfangseinheit (1) erfasst wird, und
einen vierten Schritt (S.4), in dem nur dieser einen Sende- und Empfangseinheit (1), bei der im dritten Schritt (S.3) die Veränderung einer Sende- und/oder Empfangseigenschaft erfasst worden ist, eine eindeutige Adresse zugewiesen wird.

3. Verfahren nach Anspruch 2, wobei der zweite (S.2), dritte (S.3) und vierte Schritt (S.4) solange mit einer anderen Sende- und Empfangseinheit (1), welcher noch keine eindeutige Adresse zugewiesen worden ist, durchgeführt wird, bis allen Sende- und Empfangseinheiten (1) eine eindeutige Adresse zugewiesen ist.

4. Verfahren nach einem der Ansprüche 1 bis 3, wobei die Veränderung einer Sendeeigenschaft der Sende- und Empfangseinheiten (1) ein Ändern der Masse der jeweiligen Membran der Sende- und Empfangseinheiten (1) umfasst, sodass die Zeitdauer (p2) des Nachschwingens der Membran nach einer Sendeanregung (p1) der Membran verändert wird.

5. Verfahren nach einem der Ansprüche 1 bis 3, wobei die Veränderung einer Empfangseigenschaft der Sende- und Empfangseinheiten (1) ein Ändern der Masse der jeweiligen Membran der Sende- und Empfangseinheiten (1) umfasst, sodass die Zeitdauer (p2) des Nachschwingens der Membran nach einer Empfangsanregung (p1) der Membran verändert wird.

6. Verfahren nach einem der Ansprüche 1 bis 5, wobei die Messbereiche der Sende- und Empfangseinheiten (1) während des Sendens und/oder Empfangens voneinander schallentkoppelt werden, so dass sich die Sende- und Empfangseinheiten (1) während der Messung nicht gegenseitig beeinflussen.

7. System zur Adressierung einer Mehrzahl von Sende- und Empfangseinheiten (1; 1.1, 1.2, 1.3, 1.4) einer Ultraschallabstandsmesseinrichtung, umfassend eine Adressen-Zuweisungseinrichtung (AZ) zum Zuweisen einer eindeutigen Adresse an jede der Sende- und Empfangseinheiten (1) auf der Grundlage einer Veränderung einer Sende- und/oder Empfangseigenschaft bezüglich des Sendens und Empfangens von Ultraschallsignalen jeweils einer der Sende- und Empfangseinheiten (1) durch zeitversetzte Manipulation einer Komponente der jeweiligen Sende- und Empfangseinheiten (1), wobei die Komponente der jeweiligen Sende- und Empfangseinheit (1) eine Membran derselben ist.

## Claims

1. Method for addressing a plurality of transmission and reception units (1) in an ultrasonic distance measuring device, wherein each of the transmission and reception units (1) is allocated an explicit address, specifically on the basis of an alteration in a transmission/or reception property for the transmission and reception of ultrasound signals from a respective one of the transmission and reception units (1) as a result of time-shifted manipulation of a component of the respective transmission and reception units (1), wherein the component of the respective transmission and reception units (1) is a diaphragm therein.

2. Method according to Claim 1, comprising:
a first step (S.1), in which all the transmission and reception units (1) emit and/or receive ultrasound signals,
a second step (S.2), in which a component of one of the transmission and reception units (1) is manipulated,
a third step (S.3), in which an alteration in a transmission and/or reception property of said one transmission and reception unit (1) as a result of the second step (S.2) is detected, and
a fourth step (S.4), in which only this one transmission and reception unit (1) for which, in the third step (S.3), the alteration in a transmission and/or reception property has been detected, is allocated an explicit address.

3. Method according to Claim 2, wherein the second (S.2), third (S.3) and fourth (S.4) steps are performed with another transmission and reception unit (1), which has not yet been allocated an explicit address, until all the transmission and reception units (1) have been allocated an explicit address.

4. Method according to one of Claims 1 to 3, wherein the alteration in a transmission property of the transmission and reception units (1) comprises a change in the mass of the respective diaphragm of the transmission and reception units (1), so that the period of time (p2) for post-pulse oscillation of the diaphragm after a transmission stimulus (p1) of the diaphragm is altered.

5. Method according to one of Claims 1 to 3, wherein the alteration in a reception property of the transmission and reception units (1) comprises a change in the mass of the respective diaphragm of the transmission and reception units (1), so that the period of time (p2) for post-pulse oscillation of the diaphragm after a reception stimulus (p1) of the diaphragm is altered.

6. Method according to one of Claims 1 to 5, wherein the measuring ranges of the transmission and reception units (1) are decoupled from one another in terms of sound during transmission and/or reception, so that the transmission and reception units (1) do not influence one another during the measurement.

7. System for addressing a plurality of transmission and reception units (1; 1.1, 1.2, 1.3, 1.4) in an ultrasonic distance measuring device, comprising an address allocation device (AZ) for allocating an explicit address to each of the transmission and reception units (1) on the basis of an alteration in a transmission and/or reception property for the transmission and reception of ultrasound signals from a respective one of the transmission and reception units (1) as a result of time-shifted manipulation of a component of the respective transmission and reception units (1), wherein the component of the respective transmission and reception unit (1) is a diaphragm therein.

## Revendications

1. Procédé d'adressage de plusieurs unités d'émission et de réception (1) d'un dispositif de mesure de distance par ultrasons dans lequel une adresse univoque est attribuée à chacune des unités (1) d'émission et de réception sur la base d'une modification d'une propriété d'émission et/ou de réception de signaux ultrasoniques de chaque unité (1) d'émission et de réception par manipulation temporisée d'un composant de chaque unité (1) d'émission et de réception, le composant de chaque unité (1) d'émission et de réception étant une membrane.

2. Procédé selon la revendication 1, qui comporte
une première étape (S.1) dans laquelle toutes les unités (1) d'émission et de réception émettent et/ou reçoivent des signaux ultrasoniques,
une deuxième étape (S.2) dans laquelle un composant de l'une des unités (1) d'émission et de réception est manipulé,
une troisième étape (S.3) dans laquelle une modification d'une propriété d'émission et/ou de réception, provoquée par la deuxième étape (S.2), de cette unité (1) d'émission et de réception, est détectée et
une quatrième étape (S.4) dans laquelle seule l'unité (1) d'émission et de réception dont la modification d'une propriété d'émission et/ou de réception a été détectée dans la troisième étape (S.3) reçoit une adresse univoque.

3. Procédé selon la revendication 2, dans lequel la deuxième étape (S.2), la troisième étape (S.3) et la quatrième étape (S.4) sont exécutées sur une autre unité (1) d'émission et de réception à laquelle une adresse univoque n'a pas encore été attribuée jusqu'à ce qu'une adresse univoque ait été attribuée à toutes les unités (1) d'émission et de réception.

4. Procédé selon l'une des revendications 1 à 3, dans lequel la modification d'une propriété d'émission des unités (1) d'émission et de réception comporte une modification de la masse de la membrane de l'unité d'émission et de réception (1) concernée, de telle sorte que la durée (p2) du maintien en vibration de la membrane après une excitation d'émission (p1) de la membrane soit modifiée.

5. Procédé selon l'une des revendications 1 à 3, dans lequel la modification d'une propriété de réception de chacune des unités (1) d'émission et de réception est une modification de la masse de la membrane de cette unité (1) d'émission et de réception, de telle sorte que la durée (p2) du maintien en vibration de la membrane après une excitation en réception (p1) de la membrane soit modifiée.

6. Procédé selon l'une des revendications 1 à 5, dans lequel les plages de mesure des unités (1) d'émission et de réception pendant l'émission et/ou la réception sont découplées acoustiquement les unes des autres de telle sorte que les unités (1) d'émission et de réception ne s'influencent pas mutuellement pendant la mesure.

7. Système d'adressage de plusieurs unités (1; 1.1, 1.2, 1.3, 1.4) d'émission et de réception d'un système de mesure de distance par ultrasons, comprenant un dispositif (AZ) d'attribution d'adresse qui attribue une adresse univoque à chacune des unités (1) d'émission et de réception sur la base d'une modification d'une propriété d'émission et/ou de réception de signaux ultrasoniques de chaque unité (1) d'émission et de réception, par manipulation temporisée d'un composant de chaque unité (1) d'émission et de réception, le composant de chaque unité (1) d'émission et de réception étant une membrane de cette dernière.
